# EUROPÄISCHE PATENTSCHRIFT

(11) **EP 3 658 260 B1**
(45) Veröffentlichungstag und Bekanntmachung des Hinweises auf die Patenterteilung: **25.10.2023**
(21) Anmeldenummer: 18743763.7
(22) Anmeldetag: 18.07.2018
(51) Int. Cl.: B01D 63/06, B01D 35/30, B01D 27/14, B01D 61/18

(54) **EINWEG-FILTERCAPSULE FÜR EINE FILTRATIONSVORRICHTUNG**
DISPOSABLE FILTER CAPSULE FOR A FILTRATION DEVICE
CAPSULE FILTRANTE JETABLE POUR DISPOSITIF DE FILTRATION

(30) Priorität: 26.07.2017 DE 102017116923
(43) Veröffentlichungstag der Anmeldung: 03.06.2020
(73) Patentinhaber: Sartorius Stedim Biotech GmbH, 37079 Göttingen (DE)
(72) Erfinder: FRIESE, Thomas, 37079 Göttingen (DE); LOEWE, Thomas, 37079 Göttingen (DE); LAUSCH, Ralf, 37079 Göttingen (DE); HANDT, Sebastian, 37079 Göttingen (DE); NIKOLOUDIS, Paschalis, 37079 Göttingen (DE)
(74) Vertreter: Novagraaf International SA
(86) Internationale Anmeldenummer: PCT/EP2018/069545
(87) Internationale Veröffentlichungsnummer: WO 2019/020467

(56) Entgegenhaltungen:
- EP-A1- 1 987 869
- EP-A2- 0 166 325
- EP-A2- 0 508 645
- WO-A1-2014/040669
- WO-A1-2017/032560
- DE-A1- 19 848 389

## Beschreibung

Die Erfindung betrifft eine Einweg-Filtercapsule für eine Filtrationsvorrichtung.

Aus der Separationstechnologie ist bekannt, dass Filterkerzen üblicherweise als Komponenten in Gehäusen mit geeigneten Fluidanschlüssen verbaut sind. Vor allem im Bereich der Single-Use-Anwendungen werden solche Einheiten im Allgemeinen als Filtercapsulen bezeichnet. Der Begriff "Filtercapsule" soll hier aber nicht einschränkend, sondern allgemein verstanden werden und jegliche eigenständig montierbare Baugruppe mit einem Filtermedium bezeichnen.

Filtercapsulen werden unter anderem in Steril-Filtrationsprozessen im biopharmazeutischen Bereich eingesetzt. Aus der WO 2017/032560 A1 ist eine vollständig vorsterilisierbare, anschlussfertige und integritätstestbare Einweg-Filtrationsvorrichtung bekannt, die für großvolumige Filtrationsprozesse ausgelegt ist. Diese Einweg-Filtrationsvorrichtung umfasst eine Mehrzahl von Einweg-Filtercapsulen einer Standardgröße, die durch Leitungen miteinander verbunden sind und von einer starren Halterung getragen werden.

Typischerweise wird eine solche Filtrationsvorrichtung mit einer Mehrzahl von Filtercapsulen vom selben Typ in einer vorgegebenen Baugröße bestückt. Dies limitiert die Auswahl an realisierbaren Filtrationsprozessen. Selbst wenn unterschiedliche Filtercapsulen verwendet werden, bestehen immer noch aufgrund der begrenzten Anzahl der in einer Vorrichtung einsetzbaren Filtercapsulen gewisse Beschränkungen.

Aus der DE 198 48 389 C2 ist eine Capsule zur Filtration von Fluiden mit den Merkmalen des Oberbegriffs des Anspruchs 1 bekannt, die aus zwei Gehäuseteilen zusammengesetzt ist. In einem der Gehäuseteile ist eine als Vorfilter dienende Filterpatrone aufgenommen. Dieser Gehäuseteil ist demontierbar und separat entsorgbar. Im anderen, wiederverwertbaren Gehäuseteil ist ein auf Integrität testbarer steriler Endfilter aufgenommen, der ebenfalls als Filterpatrone ausgeführt ist. Der Gehäuseteil mit dem Vorfilter verfügt über einen axialen Anschluss zum Einlass für zu filtrierendes Fluid, der in Strömungsverbindung mit einem fluiddurchlässigen Kernrohr des Vorfilters steht. Auf der dem Einlass entgegengesetzten Stirnseite ist die Vorfilterpatrone geschlossen. Der Gehäuseteil mit dem Endfilter verfügt über einen axialen Anschluss zum Auslass für Filtrat, der in Strömungsverbindung mit einem fluiddurchlässigen Kernrohr des Endfilters steht. Auf der dem Auslass entgegengesetzten Stirnseite ist die Endfilterpatrone geschlossen, d. h. die geschlossenen Stirnseiten des Vorfilters und des Endfilters liegen einander gegenüber. Das zu filtrierende Fluid gelangt vom Einlass in das einseitig geschlossene Kernrohr des Vorfilters, durchdringt die Vorfilterpatrone nach außen und gelangt in einen Außenraum, der zwischen den beiden Filterpatronen und der Gehäusewand gebildet ist. Von dort durchdringt das Fluid die Endfilterpatrone nach innen in dessen Kernrohr und strömt von dort durch den Auslass aus der Capsule heraus.

Die DE 102 39 241 A1 beschreibt eine Filtervorrichtung für Fluide mit einem Edelstahlgehäuse, das einen Zulauf für das zu filtrierende Fluid und einen Auslass für das Filtrat aufweist, und einer aus zumindest zwei sogenannten Filterelementen modular zusammengefügten Filtereinheit. Bei den Filterelementen handelt es sich um sogenannte Jumbo-Filterkerzen, die einen Durchmesser in der Größenordnung von knapp 30 cm haben. Die baugleichen Filterelemente weisen jeweils ein Filterelement mit einem inneren hohlen Stützkern und eine daran angeordnete Filterschicht auf, wobei der innere Stützkern einstückig mit einer ersten Endplatte und einer zweiten Endplatte ausgebildet ist. Die Filterelemente werden lösbar zusammengefügt, indem ein Anschlussstutzen des einen Filterelements in eine Aufnahme des anderen Filterelements eingesetzt und verrastet wird, wodurch auch eine Fluidverbindung zwischen den Stützkernen der beiden Filterelemente hergestellt wird. Die einzelnen Filterelemente werden somit parallel durchströmt. Der Auslass des Gehäuses ist mit einer gehäuseseitigen Aufnahme fluidverbunden, in die der Anschlussstutzen des letzten Filterelements eingesetzt ist, um eine Fluidverbindung zwischen dem Gehäuseauslass und den Stützkernen der Filterelemente herzustellen.

Die EP 0 508 645 A2 zeigt eine Filteranordnung aus mehreren flachen Filtereinheiten und zwei Verteilerstücken, die für die Filtermedien der Filtereinheiten eine integrierte Kapsel schaffen. Die Verteilerstücke und die Filtereinheiten sind aus einem Kunststoffmaterial gebildet und können durch Ultraschallschweißen, Schweißen mit Heizelementen, Hochfrequenzschweißen oder mittels Klebstoffen gefügt werden, oder die Verbindung kann durch mechanische Mittel in Form einer Klemmverbindung mit dazwischenliegenden Dichtelementen erfolgen.

Aus der WO 2014/040669 A1 ist eine Vorrichtung zur Kultivierung von Zellen bekannt, die aus einem Bioreaktor, einer Abluftleitung, einem Abluftfilter mit einer hydrophoben Mikrofiltermembran und einem dem Abluftfilter vorgelagerten Vorfilter besteht. Der Abluftfilter und der Vorfilter können in einem gemeinsamen Filtergehäuse angeordnet sein und einen gemeinsamen Kombinationsfilter bilden.

Die EP 0 166 325 A2 zeigt eine Vorrichtung zur selektiven Abtrennung pathologischer und/oder toxischer Spezies aus Blut oder Blutplasma, bei der zwei Filterkerzen in einem Kunststoff- oder Glasgehäuse angeordnet sind. Der Boden der ersten Filterkerze und der Deckel der zweiten Filterkerze bilden einen dichten Abschluss mit dem Boden bzw. dem Deckel des Gehäuses. Die erste Filterkerze kann über einen zentralen Zulaufstutzen des Gehäuses von innen angeströmt werden. In diesem Fall führt der Strömungsweg zum Außenbereich der ersten Filterkerze und von dort über den Außenbereich der zweiten Filterkerze in die zweite Filterkerze hinein zu einem zentralen Ablaufstutzen des Gehäuses. Alternativ ist ein Anströmen der ersten Filterkerze von außen über einen tangentialen Zulaufstutzen des Gehäuses möglich. In diesem Fall führt der Strömungsweg in die erste Filterkerze hinein, von dort direkt in die zweite Filterkerze hinein und dann durch den Außenbereich der zweiten Filterkerze zu einem tangentialen Ablaufstutzen des Gehäuses.

Die in der EP 1 987 869 A1 gezeigte Filterkartusche umfasst eine oder einen Stapel von flachen Filtereinheiten, die an ihrem Innenumfang und ihrem Außenumfang und an Endkappen miteinander abgedichtet sind, wodurch die Notwendigkeit eines den Stapel umgebenden Gehäuses entfällt. Fluidwege sind vorgesehen, so dass die Filtration des gesamten zugeführten Mediums gewährleistet ist, bevor es als Filtrat aus der Kartusche strömt.

Aufgabe der Erfindung ist es, die zuvor genannten Beschränkungen zu überwinden und flexibler gestaltbare und effizientere Filtrationsprozesse bei möglichst geringem Montageaufwand zu ermöglichen.

Gelöst wird diese Aufgabe durch eine Einweg-Filtercapsule mit den Merkmalen des Anspruchs 1. Vorteilhafte und zweckmäßige Ausgestaltungen der erfindungsgemäßen Einweg-Filtercapsule sind in den Unteransprüchen angegeben.

Die erfindungsgemäße Einweg-Filtercapsule für eine Filtrationsvorrichtung umfasst ein Gehäuse, das einen Zulaufanschluss für ein zu filtrierendes Fluid und einen Ablaufanschluss für Filtrat aufweist. Die Einweg-Filtercapsule umfasst ferner wenigstens zwei, vorzugsweise separate, Filtereinrichtungen. Alle Bauteile der Einweg-Filtercapsule bestehen aus sterilisierbaren, insbesondere gammasteriliserbaren Materialien. Alternativ kann die Sterilisation auch mittels Heißdampf bzw. Autoklavieren erfolgen.

Gemäß der Erfindung ist das Gehäuse ein einziges und komplettes Außengehäuse, das alle Komponenten der Einweg-Filtercapsule umgibt, wobei die Filtereinrichtungen in demselben Gehäuse fest verbaut sind und mit diesem eine untrennbare bauliche Einheit bilden.

Bei der erfindungsgemäßen Einweg-Filtercapsule handelt es sich um eine Flüssigkeits-Filtercapsule mit hydrophilem Filtermaterial.

Unter separaten Filtereinrichtungen sollen räumlich voneinander getrennte Filtereinrichtungen verstanden werden, die zwar im selben Filtercapsulen-Gehäuse verbaut sind, grundsätzlich aber auch als eigenständige Filtereinrichtungen verwendbar wären. Insbesondere beinhaltet eine Filtereinrichtung im Sinne der Erfindung wenigstens ein Filtermedium und ein die Form des Filtermediums unterstützendes bzw. stabilisierendes Mittel.

Ein wesentlicher Aspekt der Erfindung ist die Ausbildung der erfindungsgemäßen Filtercapsule als Einweg-Filtercapsule. Als Filtereinrichtungen in der Filtercapsule kommen insbesondere Filterkerzen oder Hohlfaserelemente in Betracht, ohne dass dies als Einschränkung zu werten ist. Die Filtereinrichtungen und das Gehäuse einschließlich der Anschlüsse sind gemäß der Erfindung als Einweg-Einheit konzipiert und können nach einmaligem Gebrauch als Ganzes entsorgt werden.

Unter einem Gehäuse ist hier ein komplettes Außengehäuse der erfindungsgemäßen Filtercapsule zu verstehen, das alle Komponenten der Filtercapsule umgibt, also nicht nur ein Teil eines Gehäuses oder ein Innengehäuse oder dergleichen. Gemäß der Erfindung sind die Filtereinrichtungen fest in dem Gehäuse verbaut und bilden mit diesem eine untrennbare bauliche Einheit. Unabhängig davon, dass jede Einheit mit ausreichender Gewalteinwirkung trennbar ist, ist im Sinne der Erfindung damit gemeint, dass für den bestimmungsgemäßen Gebrauch der Filtercapsule ein Öffnen oder Auseinandernehmen des Gehäuses und ein Austauschen einer Filtereinrichtung nicht vorgesehen sind.

Die Erfindung beruht auf der Erkenntnis, dass eine vorkonfektionierte, anschlussfertige und betriebsbereite Einweg-Filtercapsule mit wenigstens zwei Filtereinrichtungen im selben Gehäuse zahlreiche Vorteile bietet. So eröffnet die Erfindung die Möglichkeit, innerhalb einer einzigen Filtercapsule und damit - im Vergleich zu zwei separaten Filtercapsulen mit jeweils nur einer Filtereinrichtung - äußerst platzsparend eine Kombinationsfiltration durchzuführen. Je nach Wunsch und Anforderungen des Anwenders lassen sich diverse Filterkonstellationen realisieren. Beispielsweise kann in der erfindungsgemäßen Filtercapsule eine Vorfiltration und anschließend eine Sterilfiltration oder eine redundante Sterilfiltration oder stufenweise Filtration stattfinden. Die Vorkonfektionierung als untrennbare Einheit erspart jeglichen Aufwand vor der Inbetriebnahme auf Seiten des Anwenders (Zusammenbau, Kontrolle etc.). Andererseits wird durch Vorkonfektionierung als untrennbare Einheit ein kompaktes, materialsparendes Design ohne interne Verbindungskomponenten und dementsprechend mit äußerst geringen Totvolumina ermöglicht. Da auf Schläuche, Klemmen und dergleichen vollständig verzichtet werden kann zugunsten von internen starren Strömungsverbindungen, stellen im Hinblick auf Leckagerisiken etc. selbst hohe Prüfdrücke für die erfindungsgemäße Filtercapsule kein grundsätzliches Problem dar. Die Druckstabilität der erfindungsgemäßen Filtercapsule ist auch nach diversen Sterilisierungsmethoden (beispielsweise Autoklavieren und Bestrahlung) noch gegeben.

Die Ausbildung der erfindungsgemäßen Einweg-Filtercapsule mit mehreren separaten, fest in einem Gehäuse verbauten Filtereinrichtungen zur Bildung einer untrennbaren baulichen Einheit stellt somit eine kompakte All-in-One-Lösung bereit, die vollständig vorsterilisiert ausgeliefert und nach Gebrauch als Ganzes entsorgt werden kann, wobei im Vergleich zu anderen Lösungen mit mehreren einzelnen Filtereinrichtungen, die durch Schlauchleitungen miteinander verbunden sind, weniger Abfall anfällt.

Darüber hinaus zeigt die erfindungsgemäße Filtercapsule überraschenderweise Leistungsvorteile gegenüber anderen Lösungen mit mehreren Filtereinrichtungen, insbesondere im Hinblick auf die Standzeit, d. h. ein höheres Volumen kann filtriert werden, bis der Filter verblockt. Normalerweise wird etwa bei einem Kombinationsfiltrationssystem mit zwei Filtereinrichtungen in getrennten Gehäusen - bei optimaler Durchführung - maximal die Standzeit des Vorfilters erreicht. Auch eine Kombinationsplissierung, z. B. alle Filter zusammengelegt und gemeinsam plissiert oder mehrere plissierte Filter innerhalb einer Filterkerze, fallen hinsichtlich der Standzeit deutlich ab.

Bezüglich der Klärwirkung (Trübung) zeigt die erfindungsgemäße Filtercapsule bei Bestückung mit einem Vorfilter und einem Sterilfilter im selben Gehäuse eine deutlich bessere Leistung als die genannten Alternativlösungen (bis zu 30 % und mehr).

Gemäß der Erfindung sind die Filtereinrichtungen in der Filtercapsule in Serie geschaltet. Hauptziel der Erfindung ist ein sequentielles Durchströmen von zwei Filtereinrichtungen innerhalb desselben Gehäuses, um die oben genannten Vorteile voll auszuschöpfen.

Der Zulaufanschluss und der Ablaufanschluss der Filtercapsule können je nach Einbausituation vorteilhaft an entgegengesetzten Stirnenden des Gehäuses oder an einer Seitenwand des Gehäuses vorgesehen sein. Unter einer Seitenwand ist hier eine im Wesentlichen parallel zu Längsrichtungen der Filtereinrichtungen verlaufende Wand zu verstehen.

Eine bevorzugte Möglichkeit, Filtereinrichtungen, die eine im Wesentlichen zylindrische Form haben, im gemeinsamen Gehäuse anzuordnen besteht darin, die Filtereinrichtungen in axialer Richtung übereinander anzuordnen.

Es ist aber auch möglich, die Filtereinrichtungen im Wesentlichen parallel nebeneinander anzuordnen. Dies entspricht einem kassettenartigen Aufbau.

Die Filtereinrichtungen sind gemäß der Erfindungs als Filterkerzen ausgebildet, die jeweils einen hohlen, von einem Filtermedium umgebenen Kernbereich, und einen Außenbereich aufweisen, der zwischen dem Filtermedium und dem Gehäuse gebildet ist.

Gemäß der Erfindung ist die Filtercapsule so angeschlossen, dass ihr Zulaufanschluss in unmittelbarer Strömungsverbindung mit dem Außenbereich einer ersten Filtereinrichtung steht. Die erste Filtereinrichtung (Filterkerze) wird somit von außen durch das Filtermedium in den Kernbereich durchströmt.

Der Ablaufanschluss der Filtercapsule steht in unmittelbarer Strömungsverbindung mit dem Kernbereich einer zweiten Filtereinrichtung.

Die Außenbereiche der Filtereinrichtungen sind durch eine Sperre strömungstechnisch voneinander getrennt, damit sich ein gewünschter sequentieller Strömungsweg (ohne "Kurzschluss") einstellt.

Gemäß einer Alternative steht der Kernbereich der ersten Filtereinrichtung in unmittelbarer Strömungsverbindung mit dem Außenbereich der zweiten Filtereinrichtung. In diesem Fall wird die erste Filtereinrichtung vom Außenbereich zum Kernbereich und die zweite Filtereinrichtung ebenfalls vom Außenbereich zum Kernbereich durchströmt.

Für eine redundante Sterilfiltration innerhalb der erfindungsgemäßen Filtercapsule sind alle Filtereinrichtungen in der Filtercapsule als Sterilfilter ausgelegt.

Für eine kombinierte Vor- und Sterilfiltration innerhalb der erfindungsgemäßen Filtercapsule ist zumindest die erste Filtereinrichtung als Vorfilter und zumindest die zweite Filtereinrichtung als Sterilfilter oder Virusfilter ausgelegt.

Zur Durchführung einer stufenweisen Filtration oder für bestimmte andere Anwendungen ist vorgesehen, dass sich die Filtereinrichtungen hinsichtlich wenigstens eines für die Filtereinrichtungen charakteristischen Parameters unterscheiden. Solche Parameter sind beispielsweise die Porengröße des Filtermediums, die effektive Filterfläche, das Filtermaterial, die Baugröße, insbesondere die Bauhöhe, die Bauart, die Geometrie etc.

In einer speziellen Ausführungsform unterscheiden sich die Filtereinrichtungen der Einweg-Filtercapsule hinsichtlich ihrer Art. Beispielsweise kann eine Filterkerze in Kombination mit einem Hohlfaserelement in einem Gehäuse kombiniert sein.

Gemäß einer weiteren bevorzugten Ausführungsform sind wenigstens drei Filtereinrichtungen, bevorzugt wenigstens vier Filtereinrichtungen, fest in dem Gehäuse der erfindungsgemäßen Filtercapsule verbaut. Vorzugsweise unterscheiden sich alle in der Filtercapsule verbauten Filtereinrichtungen hinsichtlich eines charakteristischen Parameters, beispielsweise der Porengröße. Dadurch ist eine besonders effektive kaskadenartige Filtration möglich.

Insbesondere können wenigstens drei Filtereinrichtungen fest in dem Gehäuse der erfindungsgemäßen Filtercapsule verbaut sein, wobei wenigstens zwei dieser Filtereinrichtungen parallel geschaltet sind und wenigstens eine der Filtereinrichtungen dahinter in Serie geschaltet ist.

An jeder der erfindungsgemäßen Filtercapsulen kann wenigstens ein Entlüftungsventil angebracht sein.

Gemäß einer bevorzugten Anwendung der Erfindung sind wenigstens eine, vorzugsweise wenigstens zwei, erfindungsgemäße Filtercapsulen in eine vollständig vorsterilisierbare, anschlussfertige und integritätstestbare Einweg-Filtrationsvorrichtung integriert.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine schematische Schnittansicht einer nicht-erfindungsgemäßen ersten Ausführungsform einer Filtercapsule;
- Figur 2 eine schematische Schnittansicht einer erfindungsgemäßen zweiten Ausführungsform der Filtercapsule;
- Figur 3 eine schematische Schnittansicht einer nicht-erfindungsgemäßen dritten Ausführungsform der Filtercapsule;
- Figur 4 eine schematische Schnittansicht einer erfindungsgemäßen vierten Ausführungsform der Filtercapsule; und
- Figur 5 eine schematische Schnittansicht einer erfindungsgemäßen fünften Ausführungsform der Filtercapsule;
- Figur 6 eine perspektivische Ansicht einer erfindungsgemäßen Einweg-Filtrationsvorrichtung mit mehreren erfindungsgemäßen Einweg-Filtercapsulen; und
- Figur 7 eine schematische Schnittansicht einer erfindungsgemäßen Einweg-Filtrationsvorrichtung ohne Halterung mit mehreren erfindungsgemäßen Einweg-Filtercapsulen.

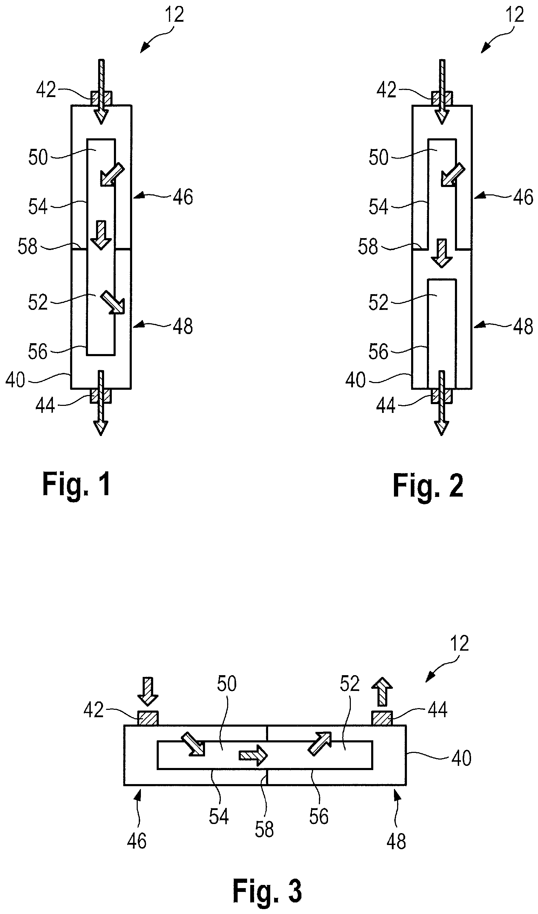

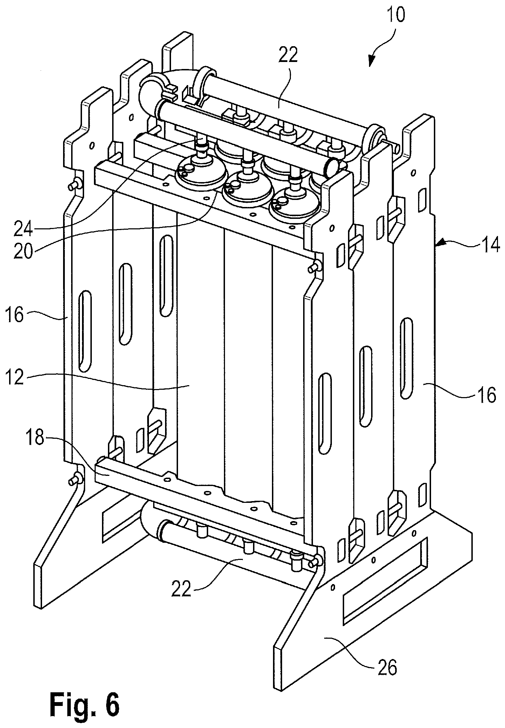

In Figur 1 ist eine nicht-erfindungsgemäße erste Ausführungsform einer Flüssigkeits-Filtercapsule 12 gezeigt, die in einer Einweg-Filtrationsvorrichtung 10, wie sie in Figur 6 gezeigt ist, oder in einer anderen Filtrationsvorrichtung verwendet werden kann. Die Filtercapsule 12 besteht im Wesentlichen aus einem länglichen Gehäuse 40 mit einem Zulaufanschluss 42 zum Einlass des zu filtrierendem Fluids und einem Ablaufanschluss 44 für das Filtrat. Der Zulaufanschluss 42 und der Ablaufanschluss 44 sind hier an entgegengesetzten Stirnenden des Gehäuses 40 vorgesehen. Der Zulaufanschluss 42 und der Ablaufanschluss 44 können gleichartig oder unterschiedlich sein,

Die Filtercapsule 12 wird üblicherweise in aufrechter Stellung, wie in Figur 1 dargestellt, in eine Filtrationsvorrichtung eingebaut. Grundsätzlich ist aber auch ein Betrieb in liegender Stellung, also um 90° gegen die Längsrichtung gedreht, oder in einer anderen Winkellage möglich.

Im Gehäuse 40 sind zwei separate Filtereinrichtungen 46, 48 in Form von Filterkerzen aufgenommen, die jeweils einen hohlen Kernbereich 50 bzw. 52 und ein dieses umgebendes Filtermedium 54 bzw. 56 aufweisen, das plissiert ist und ggf. mehrere Lagen aufweisen kann. Die beiden Filtereinrichtungen 46, 48 sind so übereinander angeordnet, dass die erste Filtereinrichtung 46 dem Zulaufanschluss 42 und die zweite Filtereinrichtung 48 dem Ablaufanschluss 44 zugewandt ist.

Die Filtereinrichtungen 46, 48 können allgemein durch Schweißen, Klemmen, Schrauben oder auf andere geeignete Weise zusammengefügt und im Gehäuse 40 befestigt sein. Es handelt sich um Filtereinrichtungen, die grundsätzlich auch als eigenständige Filtereinrichtung alleine in einer herkömmlichen Filtercapsule verwendbar wäre.

Die beiden Kernbereiche 50, 52 der Filtereinrichtungen 46, 48 stehen in unmittelbarer Strömungsverbindung miteinander, d. h. es befindet sich kein Filtermedium oder ein sonstiges Hindernis zwischen den beiden Kernbereichen 50, 52. Dagegen steht keiner der beiden Kernbereiche 50, 52 in unmittelbarer Strömungsverbindung mit dem Zulaufanschluss 42 oder dem Ablaufanschluss 44. Außerdem sind die beiden Filtereinrichtungen 46, 48 außerhalb ihrer Kernbereiche 50, 52 durch eine Sperre 58 strömungstechnisch voneinander getrennt.

Aufgrund der Sperre 58 ergibt sich zwangsweise folgender Strömungsweg durch die Filtercapsule 12: Das über den Zulaufanschluss 42 in den Außenbereich der ersten Filtereinrichtung 46 eintretende Fluid gelangt durch das Filtermedium 54 in den Kernbereich 50 der ersten Filtereinrichtung 46. Von dort kann das Fluid ungehindert in den Kernbereich 52 der zweiten Filtereinrichtung 48 übertreten. Nach dem Durchtritt durch das Filtermedium 56 in den Außenbereich der zweiten Filtereinrichtung 48 kann das filtrierte Fluid (Filtrat) über den Ablaufanschluss 44 aus der Filtercapsule 12 austreten. Die beiden Filtereinrichtungen 46, 48 werden also nacheinander, hier jedoch in unterschiedlichen Richtungen (in der ersten Filtereinrichtung 46 vom Außenbereich zum Kernbereich 50, in der zweiten Filtereinrichtung 48 dagegen vom Kernbereich 52 zum Außenbereich) durchströmt.

Die zuerst durchströmte erste Filtereinrichtung 46 kann als Vorfilter ausgelegt sein, und die danach durchströmte zweite Filtereinrichtung 48 kann als Sterilfilter ausgelegt sein. Somit kann eine kombinierte Vor- und Sterilfiltration in derselben Filtercapsule 12 durchgeführt werden. Es ist aber auch möglich, beide Filtereinrichtung 46, 48 als Sterilfilter auszulegen. Mit dem sequentiellen Durchströmen der beider Filtereinrichtungen 46, 48 wird damit eine redundante Sterilfiltration in derselben Filtercapsule 12 erreicht. Auch andere Filtertypen oder gleiche Filtertypen mit unterschiedlichen Parametern können in der Filtercapsule 12 kombiniert werden. Beispielsweise können Filtereinrichtungen 46, 48 eingesetzt werden, deren Filtermedien 54, 56 unterschiedliche Porengrößen aufweisen, um eine abgestufte Filterkombination zu realisieren.

Die beiden Filtereinrichtungen 46, 48 müssen nicht die gleiche Baugröße haben, sondern können sich - etwa bedingt durch die konkreten Anforderungen an den Filtrationsprozess - insbesondere hinsichtlich Länge, Durchmesser, Filterfläche und Form unterscheiden, solange der oben beschriebene Strömungsweg innerhalb des gemeinsamen Gehäuses 40 gewährleistet ist.

Die Filtercapsule 12 ist eine vorkonfigurierte, vor Auslieferung vollständig zusammengebaute, anschlussfertige und betriebsbereite Baugruppe. Das Gehäuse 40 der Filtercapsule 12 sieht kein Öffnen oder Lösen von Gehäuseteilen vor, etwa um eine Filtereinrichtung auszutauschen. Die im Gehäuse 40 aufgenommenen Filtereinrichtungen 46, 48 bilden vielmehr eine untrennbare Einheit mit dem Gehäuse 40.

Die gesamte Filtercapsule 12 einschließlich des Zulaufanschlusses 42 und des Ablaufanschlusses 44 besteht aus sterilisierbaren, insbesondere gammasterilisierbaren Materialien und ist als Einweg-Filtercapsule konzipiert. Das bedeutet, dass die Filtercapsule 12 nach einmaligem bestimmungsgemäßem Gebrauch als Ganzes entsorgt wird.

Die in Figur 2 gezeigte zweite Ausführungsform der Filtercapsule 12 unterscheidet sich von der ersten Ausführungsform durch die Anordnung der Filtereinrichtungen 46, 48 und die dadurch bedingte Strömungsrichtung durch die zweite Filtereinrichtung 48.

Wie bei der ersten Ausführungsform trennt die Sperre 58 die beiden Außenbereiche der Filtereinrichtungen 46, 48. Im Gegensatz zur ersten Ausführungsform kann das Fluid nach dem Durchtritt durch das Filtermedium 54 in den Kernbereich 50 der ersten Filtereinrichtung 46 ungehindert in den Außenbereich der zweiten Filtereinrichtung 48 übertreten, der hier nicht mit dem Ablaufanschluss 44 in Strömungsverbindung steht. Das Fluid muss also durch das Filtermedium 56 in den Kernbereich 52 der zweiten Filtereinrichtung 48 strömen, der hier mit dem Ablaufanschluss 44 in Strömungsverbindung steht, sodass das Filtrat aus der Filtercapsule 12 austreten kann.

Die beiden Filtereinrichtungen 46, 48 werden also wiederum nacheinander, hier jedoch jeweils in der gleichen Richtung (jeweils vom Außenbereich zum Kernbereich 50 bzw. 52) durchströmt.

Ansonsten gilt für diese und die nachfolgend beschriebenen weiteren Ausführungsformen der Filtercapsule 12 das Gleiche wie für die erste Ausführungsform, insbesondere bezüglich des Aufbaus als untrennbare Einheit, der Wahl der Filtereinrichtungen 46, 48, der sterilisierbaren Materialien und der Einweg-Verwendung der gesamten Filtercapsule 12.

Die in Figur 3 gezeigte nicht-erfindungsgemäße dritte Ausführungsform der Filtercapsule 12 entspricht großteils der ersten Ausführungsform (Figur 1). Allerdings ist die Filtercapsule 12 hier für einen liegenden Einsatz vorgesehen. Der Zulaufanschluss 42 und der Ablaufanschluss 44 sind nicht an den entgegengesetzten Stirnenden des Gehäuses 40 vorgesehen, sondern seitlich an der Mantelfläche des Gehäuses 40. In der Einbaulage weisen der Zulaufanschluss 42 und der Ablaufanschluss 44 bevorzugt nach oben, wobei auch andere Anordnungen möglich sind, z. B. ein bezogen auf die Lage im Betrieb oben angeordneter Zulaufanschluss 42 und ein unten angeordneter Ablaufanschluss 44.

Für die oben beschriebenen Ausführungsformen können als Filtereinrichtungen 46, 48 Filterkerzen mit einem Außendurchmesser im Bereich von etwa 20 bis 170 mm und Längen im Bereich von etwa 30 bis 270 mm verwendet werden.

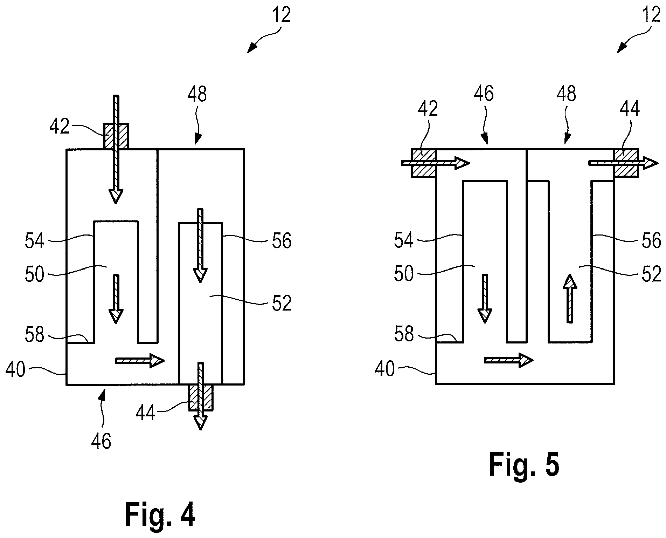

Die Figuren 4 und 5 zeigen eine vierte und eine fünfte Ausführungsform der Filtercapsule 12, deren Gestaltung eher einer Filterkassette gleicht oder zumindest ähnlich ist. Die Filtereinrichtungen 46, 48 sind hier im gemeinsamen Gehäuse 40 nicht übereinander, sondern - bezogen auf ihre Längsrichtung - nebeneinander angeordnet.

Prinzipiell gleicht der Strömungsweg bei beiden Ausführungsformen dem der zweiten Ausführungsform (Figur 2), also vom Außenbereich der ersten Filtereinrichtung 46 in deren Kernbereich 50 und von dort über den Außenbereich der zweiten Filtereinrichtung 48 in deren Kernbereich 52.

Wie bei der zweiten Ausführungsform steht der Zulaufanschluss 42 mit dem Außenbereich der ersten Filtereinrichtung 46 und der Ablaufanschluss 44 mit dem Kernbereich 52 der zweiten Filtereinrichtung 48 in unmittelbarer Strömungsverbindung. Bei der in Figur 4 gezeigten vierten Ausführungsform sind der Zulaufanschluss 42 und der Ablaufanschluss 44 versetzt an entgegengesetzten Seiten des gemeinsamen Gehäuses 40 angeordnet, die den Stirnenden der Filtereinrichtungen 46, 48 gegenüberliegen. Bei der in Figur 5 gezeigten fünften Ausführungsform sind der Zulaufanschluss 42 und der Ablaufanschluss 44 nicht versetzt am oberen Ende von Gehäuseseiten angeordnet, die im Wesentlichen parallel zu den Längsrichtungen der Filtereinrichtungen 46, 48 verlaufen.

Die Erfindung ist nicht auf die konkret gezeigten und beschriebenen Ausführungsformen der Filtercapsule 12 beschränkt. Selbstverständlich können einzelne Aspekte der verschiedenen Ausführungsformungen miteinander kombiniert werden.

Allen Ausführungsformen der Filtercapsule 12 gemeinsam ist, dass wenigstens zwei Filtereinrichtungen 46, 48 hintereinander, also in Serie geschaltet sind. Grundsätzlich können innerhalb des Gehäuses 40 auch mehr als zwei Filtereinrichtungen 46, 48 vorgesehen sein. Die Strömungsrichtungen durch die einzelnen Filtereinrichtungen 46, 48 (vom Außenbereich zum Kern oder umgekehrt) ergeben sich aus der konkreten Anordnung und Gestaltung der Filtereinrichtungen 46, 48. Sie können bei allen Filtereinrichtungen 46, 48 gleich sein oder variieren.

Damit eine Filtercapsule 12 einem Integritätstest unterzogen werden kann, ist eine Abwandlung der üblichen Integritätstestprozesse erforderlich. Technisch funktioniert eine Integritätstest-Messung für jedes einzelne Segment, also für jede Filtereinrichtung 46, 48 separat, sofern abgestufte Filtermaterial-Porengrößen vorliegen und jedes Segment einen Ventilanschluss hat. Dieser wird ohnehin zur Entlüftung benötigt.

Nach einer ersten Methode wird ein Integritätstest mit einem geeigneten Prüfgerät indirekt vom Zulaufanschluss 42 her stufenweise durch die einzelnen Filtereinrichtungen 46, 48 hindurch durchgeführt. Der sogenannte Bubble Point wird innerhalb einer Messung für jede Filtereinrichtung 46, 48 durchlaufen und ist aus dem Verlauf des Messdruckes auswertbar. Die Diffusionsmessung muss - wiederum vom Zulaufanschluss 42 aus - mit einem separaten Testdruck für jede Filtereinrichtung 46, 48 stufenweise angesteuert werden, wobei die Einschränkung gilt, dass jeder Diffusionstestdruck über dem Bubble-Point-Druck der vorgelagerten Filtereinrichtung 46, 48 liegen muss.

Nach einer zweiten Methode erfolgt eine Integritätstest-Messung an jeder Filtereinrichtung 46, 48 einzeln, wobei das Prüfgerät über das jeweilige Entlüftungsventil der jeweiligen Filtereinrichtung 46, 48 angeschlossen wird. Dies funktioniert nach dem heute üblichen Integritätstestverfahren. Voraussetzung ist, dass der zentrale Eingang der Einweg-Filtercapsule 12 verschlossen ist, sodass in den vorgelagerten Filtereinrichtungen 46, 48 Druckaufbau und Dichtigkeit vorliegt. Gegebenenfalls müssen die Filtereinrichtungen 46, 48 über ihre Entlüftungsventile ebenfalls an das Prüfgerät angeschlossen werden, um einen Druckausgleich zu gewährleisten.

Wie bereits erwähnt, ist eine bevorzugte Anwendung der Filtercapsule 12 der Einsatz in einer Einweg-Filtrationsvorrichtung. In Figur 6 ist beispielhaft eine solche Einweg-Filtrationsvorrichtung 10 dargestellt, die der aus der WO 2017/032560 A1 bekannten Vorrichtung ähnlich ist. Eine Mehrzahl von Filtercapsulen 12 können hier von einer starren Halterung 14 in einer vorgegebenen Anordnung (Raster) in Position gehalten werden. Die Halterung 14 umfasst wenigstens zwei gegenüberliegende Seitenwände 16, die durch Querstreben 18 miteinander verbunden sind, wobei die Seitenwände 16 Standfüße 26 aufweisen können. An den Querstreben 18 sind Haltemittel 20 für die einzelnen Filtercapsulen 12 vorgesehen.

Die Filtercapsulen 12 sind vollständig oder zumindest großteils durch starre, druckstabile Rohrleitungen 22 mit definiertem Durchmesser miteinander verbunden. Der Verlauf der Rohrleitungen 22 ist bestimmt durch den vorgesehenen Betrieb der Filtrationsvorrichtung 10 (Parallel- oder Reihenschaltung oder Kombination aus Parallel- und Reihenschaltung der Filtercapsulen 12), wobei die Rohrleitungen 22 die notwendigen Abzweigungen 24 zu den einzelnen Filtercapsulen 12 aufweisen. Insbesondere bilden die Rohrleitungen 22 entweder mehrere Leitungszweige mit zugehörigen Filtercapsulen 12, die nacheinander oder parallel durchströmt werden, oder wenigstens zwei getrennte, voneinander unabhängige Leitungszweige mit zugehörigen Filtercapsulen 12. Soweit erforderlich sind die Rohrleitungen 22 an der Halterung 14 befestigt. Die Filtercapsulen 12 sind insbesondere hinsichtlich Filterart, Bauart und/oder Baugröße für einen gewünschten Filtrationsprozess vorkonfiguriert. Entsprechendes gilt für die Anordnung und den Verlauf sowie die Anschlüsse der Rohrleitungen 22.

Die wesentlichen Bestandteile der starren Halterung 14, die starren Gehäuse der Filtercapsulen 12 und die starren Rohrleitungen 22 sind allesamt vorzugsweise aus demselben Material gebildet. Dieses Material und ggf. weitere Materialien, die bei der Vorrichtung 10 Verwendung finden (z. B. für etwaige flexible Schlauchleitungen), sind sterilisierbar, insbesondere mittels Gammastrahlung, und nach der einmaligen Nutzung autoklavierbar. Die Filtrationsvorrichtung 10 kann somit im vormontierten, d. h. anschlussfertigen Zustand verpackt und sterilisiert werden.

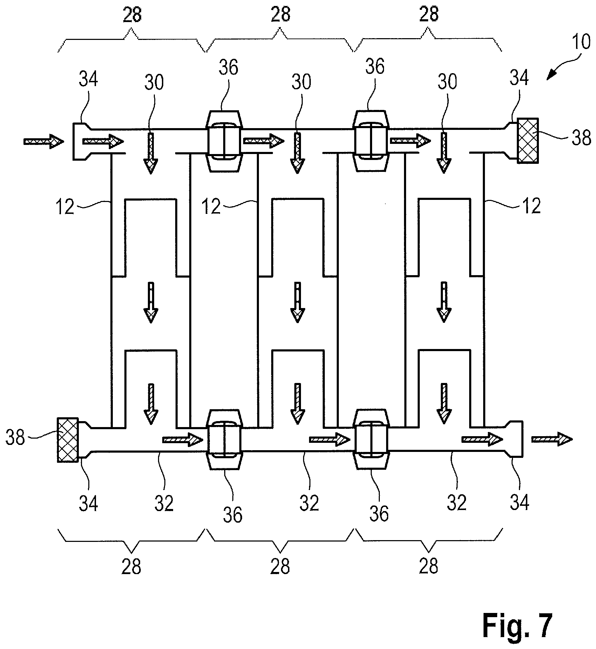

In Figur 7 ist schematisch eine besondere Ausführungsform der Einweg-Filtrationsvorrichtung 10 ohne die Halterung 14 dargestellt. Die Einweg-Filtrationsvorrichtung 10 ist hier mit Filtercapsulen 12 gezeigt, bei denen jeweils zwei separate Filtereinrichtungen übereinander fest in einem Gehäuse 40 verbaut sind.

Anstelle der Rohrleitungen 22 und Abzweigungen 24 sind hier starre, vereinheitlichte Zu- und Ablaufeinheiten 28 aus sterilisierbarem, insbesondere gammasterilisierbarem Kunststoff vorgesehen. Für jede Filtercapsule 12 ist eine eigene Zu- und Ablaufeinheit 28 mit einer Zulaufeinrichtung 30 bzw. einer Ablaufeinrichtung 32 vorgesehen, die auf die stirnseitigen Zulauf- und Ablaufanschlüsse der jeweiligen Filtercapsule 12 abgestimmt sind. Die Zulaufeinrichtung 30 und die Ablaufeinrichtung 32 sind entweder vollständig identisch oder wenigstens großteils identisch aufgebaut. Sowohl die Zulaufeinrichtung 30 als auch die Ablaufeinrichtung 32 weisen jeweils zwei entgegengesetzte Außenanschlüsse 34 auf. Durch geeignete Verbindungsbauteile 36, wie etwa TRI-Clamp-Verbindungen, können mehrere Zu- und Ablaufeinheiten 28 unter kontrollierten Bedingungen miteinander verbunden werden. Auf diese Weise können beliebig viele Filtercapsulen 12 zusammengefügt werden. Die nicht benötigten Außenanschlüsse 34 werden durch geeignete Verschlüsse 38 unter kontrollierten Bedingungen abgedichtet. Diese Verschlüsse 38 oder auch Blindkappen werden ebenfalls mittels geeigneter Verbindungsbauteile 36 angebracht. Die Zu- und Ablaufeinheiten 28 können einstückig, als Bausatz oder als vorgefertigte Einheit ausgebildet sein. Insbesondere können mehrere Zulaufeinrichtungen 30 und/oder Ablaufeinrichtungen 32 einstückig ausgebildet oder vormontiert sein, bevor sie an den Filtercapsulen 12 angebracht werden.

Insbesondere in der Ausführung mit mehreren zusammenhängenden Zulaufeinrichtungen 30 und/oder Ablaufeinrichtungen 32, die auch als Serienschaltungsdeckel bezeichnet werden können, ergeben sich gegenüber anderen Leitungsverbindungen zahlreiche Vorteile. Insbesondere sind keine oder zumindest weniger große Rohrleitungen 22 notwendig. Die Serienschaltungsdeckel ermöglichen das parallele Anströmen mehrerer Filtercapsulen 12 und lassen sich bezüglich der Baugrößen und Bauarten der Filtercapsulen 12 beliebig kombinieren. Insgesamt verhelfen die Serienschaltungsdeckel der Einweg-Filtrationsvorrichtung 10 zu einer kompakteren, kleineren Baugröße, auch weil die Halterung 14 kleiner ausfallen kann. Da bei Verwendung von Serienschaltungsdeckeln weniger Komponenten benötigt werden, ist die Einweg-Filtrationsvorrichtung 10 damit insgesamt umweltfreundlicher.

Allgemein ist es bei einem Einsatz mehrerer Filtercapsulen 12 in einer Einweg-Filtrationsvorrichtung 10, wie sie beispielsweise in Figur 6 oder Figur 7 gezeigt ist, möglich, einen an einem oberen Außenanschluss der Einweg-Filtrationsvorrichtung 10 angeordneten zentralen sterilisierbaren Luftfilter für die gemeinsame Entlüftung aller oder zumindest einer Gruppe von Filtercapsulen 12 vorzusehen. Das bedeutet, dass die Entlüftung mehrerer Filtercapsulen 12 gebündelt an nur einer Stelle durchgeführt werden kann. Über den gemeinsamen Luftfilter kann außerdem die Integrität der zugeordneten Filtercapsulen 12 gemeinsam getestet werden.

Ebenso kann die Entleerung der Filtercapsulen 12 zentral erfolgen. An der tiefsten Stelle aller oder einer Gruppe von Filtercapsulen 12 kann eine zentrale Auffangeinrichtung für deren gemeinsame Entleerung angeordnet werden.

Um eine optimale gemeinsame Entlüftung bzw. Entleerung sicherzustellen, sollten die jeweiligen Filtercapsulen 12 von der Halterung 14 in aufrechter Stellung gehalten werden.

Im Hinblick darauf, eine anschlussfertige Einweg-Filtrationsvorrichtung 10 mit Filtercapsulen 12 bereitzustellen, die die Durchführung eines teil- oder vollautomatisierten Filtrationsverfahrens erlaubt, insbesondere in großem Maßstab, können Sensoren zur Erfassung bestimmter Prozessparameter und Regeleinrichtungen zur Einstellung bestimmter Prozessparameter vorgesehen sein. Die Sensoren und Regeleinrichtungen sind mit einem externen Kontroll- und Steuerungssystem verbunden, das zur Auswertung und Verarbeitung von Sensordaten sowie zur Ansteuerung der Regeleinrichtungen basierend auf einem oder mehreren Steuerungsalgorithmen eingerichtet ist.

### Bezugszeichenliste

- 10: Einweg-Filtrationsvorrichtung
- 12: Filtercapsule
- 14: Halterung
- 16: Seitenwand
- 18: Querstrebe
- 20: Haltemittel
- 22: Rohrleitung
- 24: Abzweigung
- 26: Standfuß
- 28: Zu- und Ablaufeinheit
- 30: Zulaufeinrichtung
- 32: Ablaufeinrichtung
- 34: Außenanschluss
- 36: Verbindungsbauteil
- 38: Verschluss
- 40: Gehäuse
- 42: Zulaufanschluss
- 44: Ablaufanschluss
- 46: erste Filtereinrichtung
- 48: zweite Filtereinrichtung
- 50: Kernbereich der ersten Filtereinrichtung
- 52: Kernbereich der zweiten Filtereinrichtung
- 54: Filtermedium der ersten Filtereinrichtung
- 56: Filtermedium der zweiten Filtereinrichtung
- 58: Sperre

## Patentansprüche

1. Einweg-Filtercapsule (12) für eine Filtrationsvorrichtung, mit
einem Gehäuse (40), das einen Zulaufanschluss (42) für ein zu filtrierendes Fluid und einen Ablaufanschluss (44) für Filtrat aufweist, und
wenigstens zwei Filtereinrichtungen,
wobei die Filtereinrichtungen (46, 48) in Serie geschaltet sind,
wobei alle Bauteile der Einweg-Filtercapsule (12) aus sterilisierbaren, insbesondere gammasteriliserbaren Materialien bestehen,
wobei die Filtereinrichtungen (46, 48) als Filterkerzen ausgebildet sind, die jeweils einen hohlen, von einem plissierten Filtermedium (54, 56) umgebenen Kernbereich (50, 52), und einen Außenbereich aufweisen, der zwischen dem plissierten Filtermedium (54, 56) und dem Gehäuse (40) gebildet ist, und
wobei die Einweg-Filtercapsule (12) eine Flüssigkeits-Filtercapsule mit hydrophilem Filtermaterial ist,
**dadurch gekennzeichnet, dass**
das Gehäuse (40) ein einziges und komplettes Außengehäuse ist, das alle Komponenten der Einweg-Filtercapsule (12) umgibt,
wobei die Filtereinrichtungen (46, 48) in demselben Gehäuse (40) fest verbaut sind und mit diesem eine untrennbare bauliche Einheit bilden,
wobei der Zulaufanschluss (42) in unmittelbarer Strömungsverbindung mit dem Außenbereich einer ersten Filtereinrichtung (46) steht und der Ablaufanschluss (44) in unmittelbarer Strömungsverbindung mit dem Kernbereich (52) einer zweiten Filtereinrichtung (48) steht, und
wobei die Außenbereiche der Filtereinrichtungen (46, 48) durch eine Sperre (58) strömungstechnisch voneinander getrennt sind.

2. Einweg-Filtercapsule (12) nach Anspruch 1, **dadurch gekennzeichnet, dass** wenigstens zwei separate Filtereinrichtungen (46, 48) fest in dem Gehäuse (40) verbaut sind.

3. Einweg-Filtercapsule (12) nach Anspruch 1 oder 2, **dadurch gekennzeichnet, dass** der Zulaufanschluss (42) und der Ablaufanschluss (44) an entgegengesetzten Stirnenden des Gehäuses (40) vorgesehen sind.

4. Einweg-Filtercapsule (12) nach Anspruch 1 oder 2, **dadurch gekennzeichnet, dass** der Zulaufanschluss (42) und der Ablaufanschluss (44) an einer Seitenwand des Gehäuses (40) vorgesehen sind.

5. Einweg-Filtercapsule (12) nach einem der vorhergehenden Ansprüche, **dadurch gekennzeichnet, dass** die Filtereinrichtungen (46, 48) zylindrisch sind und in axialer Richtung übereinander oder parallel nebeneinander angeordnet sind.

6. Einweg-Filtercapsule (12) nach einem der vorhergehenden Ansprüche, **dadurch gekennzeichnet, dass** der Kernbereich (50) der ersten Filtereinrichtung (46) in unmittelbarer Strömungsverbindung mit dem Außenbereich der zweiten Filtereinrichtung (48) steht.

7. Einweg-Filtercapsule (12) nach einem der vorhergehenden Ansprüche, **dadurch gekennzeichnet, dass** die Filtereinrichtungen (46, 48) als Sterilfilter ausgelegt sind.

8. Einweg-Filtercapsule (12) nach einem der Ansprüche 1 bis 6, **dadurch gekennzeichnet, dass** die erste Filtereinrichtung (46) als Vorfilter und die zweite Filtereinrichtung (48) als Sterilfilter oder Virusfilter ausgelegt ist.

9. Einweg-Filtercapsule (12) nach einem der vorhergehenden Ansprüche, **dadurch gekennzeichnet, dass** sich die Filtereinrichtungen (46, 48) hinsichtlich wenigstens eines für die Filtereinrichtungen (46, 48) charakteristischen Parameters unterscheiden.

10. Einweg-Filtercapsule (12) nach einem der vorhergehenden Ansprüche, **dadurch gekennzeichnet, dass** wenigstens drei Filtereinrichtungen (46, 48), bevorzugt wenigstens vier Filtereinrichtungen (46, 48) fest in dem Gehäuse (40) verbaut sind.

11. Vollständig vorsterilisierbare, anschlussfertige und integritätstestbare Einweg-Filtrationsvorrichtung (10), **gekennzeichnet durch** wenigstens eine, vorzugsweise wenigstens zwei, Einweg-Filtercapsulen (12) nach einem der vorhergehenden Ansprüche, wobei vorzugsweise ein zentraler Luftfilter für die gemeinsame Entlüftung aller oder einer Gruppe von Filtercapsulen (12) und/oder vorzugsweise eine zentrale Auffangeinrichtung für die Entleerung aller oder einer Gruppe von Filtercapsulen (12) vorgesehen ist/sind und/oder vorzugsweise mehrere Filtercapsulen (12) durch starre Leitungen miteinander verbunden und in einem durch eine Halterung (14) universell vorgegebenen Raster fest angebracht sind, wobei die Filtercapsulen (12), insbesondere hinsichtlich Filterart, Bauart und/oder Baugröße, und/oder die Verbindungen der Filtercapsulen (12) für einen gewünschten Filtrationsprozess vorkonfiguriert sind.

## Claims

1. Disposable filter capsule (12) for a filtration device, comprising
a housing (40), which has an inflow connection (42) for a fluid to be filtered and an outflow connection (44) for filtrate, and
at least two filter means,
wherein the filter means (46, 48) are connected in series,
wherein all the components of the disposable filter capsule (12) are made of sterilizable materials, in particular gamma-sterilizable materials,
wherein the filter means (46, 48) are configured as filter cartridges, each having a hollow core area (50, 52), which is surrounded by a pleated filter medium (54, 56), and an outer area, which is formed between the pleated filter medium (54, 56) and the housing (40), and
wherein the disposable filter capsule (12) is a filter capsule for liquid, comprising a hydrophilic filter material,
**characterized in that**
the housing (40) is a single and complete outer housing, which surrounds all the components of the disposable filter capsule (12),
wherein the filter means (46, 48) are fixedly installed in the same housing (40) and form with the latter an inseparable structural unit,
wherein the inflow connection (42) is in direct flow connection with the outer area of a first filter means (46) and the outflow connection (44) is in direct flow connection with the core area (52) of a second filter means (48), and
wherein the outer areas of the filter means (46, 48) are fluidically separated from each other by a barrier (58).

2. Disposable filter capsule (12) according to claim 1, **characterized in that** at least two separate filter means (46, 48) are fixedly installed in the housing (40).

3. Disposable filter capsule (12) according to claim 1 or 2, **characterized in that** the inflow connection (42) and the outflow connection (44) are provided on opposite end faces of the housing (40).

4. Disposable filter capsule (12) according to claim 1 or 2, **characterized in that** the inflow connection (42) and the outflow connection (44) are provided on a side wall of the housing (40).

5. Disposable filter capsule (12) according to any one of the preceding claims, **characterized in that** the filter means (46, 48) are cylindrical and are arranged one above the other or in parallel next to each other in the axial direction.

6. Disposable filter capsule (12) according to any one of the preceding claims, **characterized in that** the core area (50) of the first filter means (46) is in direct flow connection with the outer area of the second filter means (48).

7. Disposable filter capsule (12) according to any one of the preceding claims, **characterized in that** the filter means (46, 48) are configured as sterile filters.

8. Disposable filter capsule (12) according to any one of claims 1 to 6, **characterized in that** the first filter means (46) is configured as a pre-filter and the second filter means (48) is configured as a sterile filter or as a virus filter.

9. Disposable filter capsule (12) according to any one of the preceding claims, **characterized in that** the filter means (46, 48) differ from each other with regard to at least one parameter characteristic of the filter means (46, 48).

10. Disposable filter capsule (12) according to any one of the preceding claims, **characterized in that** at least three filter means (46, 48), preferably at least four filter means (46, 48), are fixedly installed in the housing (40).

11. Disposable filtration device (10) which is fully pre-sterilizable, integrity-testable and ready for connection, **characterized by** at least one, preferably at least two disposable filter capsules (12) according to any one of the preceding claims, wherein preferably a central air filter is provided for the common venting of all or a group of filter capsules (12), and/or preferably a central collecting means is provided for draining all or a group of filter capsules (12), and/or preferably a plurality of filter capsules (12) are connected to each other by rigid lines and are fixedly mounted in a grid that is universally predefined by a support (14), the filter capsules (12) being preconfigured in particular in terms of filter type, design and/or size, and/or the connections of the filter capsules (12) being preconfigured for a desired filtration process.

## Revendications

1. Capsule filtrante jetable (12) pour un dispositif de filtration, comprenant
un logement (40) qui présente un raccordement d'admission (42) pour un fluide à filtrer et un raccordement d'évacuation (44) pour filtrat, et
au moins deux équipements filtrants,
dans lequel les équipements filtrants (46, 48) sont montés en série,
dans lequel toutes les composantes de la capsule filtrante jetable (12) sont composées de matériaux pouvant être stérilisés, en particulier pouvant être stérilisés aux rayons gamma,
dans lequel les équipements filtrants (46, 48) sont conçus en tant que bougies filtrantes qui présentent respectivement une zone centrale (50, 52) creuse et entourée d'un milieu filtrant (54, 56) plissé et une zone extérieure qui est formée entre le milieu filtrant (54, 56) plissé et le logement (40), et
dans lequel la capsule filtrante jetable (12) est une capsule filtrante pour liquide avec un matériau filtrant hydrophile,
**caractérisé en ce que**
le logement (40) est un logement extérieur unique et complet qui entoure toutes les composantes de la capsule filtrante jetable (12),
dans lequel les équipements filtrants (46, 48) sont solidement installés dans le même logement (40) et forment avec celui-ci une unité de construction inséparable,
dans lequel le raccordement d'admission (42) est en liaison d'écoulement directe avec la zone extérieure d'un premier équipement filtrant (46) et le raccordement d'évacuation (44) est en liaison d'écoulement directe avec la zone centrale (52) d'un deuxième équipement filtrant (48), et
dans lequel les zones extérieures des équipements filtrants (46, 48) sont fluidiquement séparées l'une de l'autre par un barrage (58).

2. Capsule filtrante jetable (12) selon la revendication 1, **caractérisée en ce qu'**au moins deux équipements filtrants (46, 48) séparés sont solidement installés dans le logement (40).

3. Capsule filtrante jetable (12) selon la revendication 1 ou 2, **caractérisée en ce que** le raccordement d'admission (42) et le raccordement d'évacuation (44) sont prévus contre des extrémités frontales opposées du logement (40).

4. Capsule filtrante jetable (12) selon la revendication 1 ou 2, **caractérisée en ce que** le raccordement d'admission (42) et le raccordement d'évacuation (44) sont prévus contre une paroi latérale du logement (40).

5. Capsule filtrante jetable (12) selon l'une des revendications précédentes, **caractérisée en ce que** les équipements filtrants (46, 48) sont cylindriques et sont agencés dans la direction axiale les uns sur les autres ou parallèles les uns à côté des autres.

6. Capsule filtrante jetable (12) selon l'une des revendications précédentes, **caractérisée en ce que** la zone centrale (50) du premier équipement filtrant (46) est en liaison d'écoulement directe avec la zone extérieure du deuxième équipement filtrant (48).

7. Capsule filtrante jetable (12) selon l'une des revendications précédentes, **caractérisée en ce que** les équipements filtrants (46, 48) sont réalisés en tant que filtres stériles.

8. Capsule filtrante jetable (12) selon l'une des revendications 1 à 6, **caractérisée en ce que** le premier équipement filtrant (46) est réalisé en tant que préfiltre et le deuxième équipement filtrant (48) est réalisé en tant que filtre stérile ou filtre viral.

9. Capsule filtrante jetable (12) selon l'une des revendications précédentes, **caractérisée en ce que** les équipements filtrants (46, 48) se différencient en fonction d'au moins un paramètre caractéristique pour les équipements filtrants (46, 48).

10. Capsule filtrante jetable (12) selon l'une des revendications précédentes, **caractérisée en ce qu'**au moins trois équipements filtrants (46, 48), de préférence au moins quatre équipements filtrants (46, 48), sont solidement installés dans le logement (40).

11. Dispositif de filtration jetable (10) pouvant être entièrement préstérilisé, prêt à être raccordé et pouvant faire l'objet d'un test d'intégrité, **caractérisé par** au moins une, de préférence au moins deux, capsules filtrantes jetables (12) selon l'une des revendications précédentes, dans lequel de préférence un filtre à air central pour l'aération commune de toutes les ou d'un groupe de capsules filtrantes (12) et/ou de préférence un équipement collecteur central pour le vidage de toutes les ou d'un groupe de capsules filtrantes (12) est/sont prévu(s) et/ou de préférence plusieurs capsules filtrantes (12) sont reliées entre elles par des conduites rigides et solidement amenées dans une grille universellement prédéfinie par un support (14), dans lequel les capsules filtrantes (12), en particulier en fonction du type de filtration, du type de construction et/ou de l'encombrement, et/ou les liaisons des capsules filtrantes (12) sont préconfigurées pour un processus de filtration souhaité.
